Europäisches Patentamt

European Patent Office

Office européen des brevets

(19)

(11) Veröffentlichungsnummer: **0 339 013**
**A2**

(12) **EUROPÄISCHE PATENTANMELDUNG**

(21) Anmeldenummer: **89890001.4**

(22) Anmeldetag: **02.01.89**

(51) Int. Cl.⁴: **C 02 F 3/12**
**F 16 K 7/17**

(30) Priorität: **20.04.88 EP 88890099**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **STOISER & WOLSCHNER Alleininhaber**
**Dipl.-Ing. Heinz Wolschner**
**SW-span-Kläranlagen-Umwelttechnik**
**Bahnstrasse 87 u. 93**
**A-9020 Klagenfurt (Kärnten) (AT)**

(72) Erfinder: **Polzer, Erich, Dr.**
**Pischeldorferstrasse 10**
**A-9020 Klagenfurt (AT)**

(74) Vertreter: **Beer, Manfred, Dipl.-Ing. et al**
**Lindengasse 8**
**A-1070 Wien (AT)**

(54) **Vorrichtung zum Aufbereiten von Abwasser.**

(57) Eine Vorrichtung zum Aufbereiten von Abwasser unter Belüftung besitzt ein Belebungsbecken (2) und eine im Belebungsbecken (2) vorgesehene Belüftungsvorrichtung (7). Während im Belebungsbekken (2) belüftet wird, wird der Ablauf (10) des Belebungsbeckens von einem durch ein Druckmedium betätigtes Verschlußorgan (11), das eine unter der Wirkung des Druckmediums an die Mündung (10') des Ablaufes (10) anlegbare elastische Folie (12) aufweist, geschlossen gehalten. Falls dem Belebungsbecken (2) ein Nachklärbecken (25) nachgeschaltet ist, ist das Verschlußorgan (11) dem Ablauf (10) des Nachklärbeckens (25) zugeordnet und es ist eine Rückführleitung (29) für Belebtschlamm aus dem Nachklärbecken (25) in das Belebungsbecken (2) vorgesehen, die durch ein druckmediumbetätigtes Verschlußorgan (30) absperrbar ist.

FIG.1

FIG.3

**Beschreibung**

## Vorrichtung zum Aufbereiten von Abwasser

Die Erfindung betrifft eine Vorrichtung zum Aufbereiten von Abwasser mit Belüftung, wie beispielsweise Belebungsbecken oder Oxidationsgraben, mit einer in das Becken reichenden Belüftungsvorrichtung, einem Zulauf und einem Ablauf, wobei der Ablauf des Belebungsbeckens oder eines diesem nachgeschalteten Nachklärbeckens durch ein Verschlußorgan absperrbar ist.

Naturwissenschaftliche Erkenntnisse und technische Erfahrungen lassen den Schluß zu, daß die gemeinsame aerobe Stabilisierung des Schlammes in der nassen Phase als technisch vollwertige Methoden zur Verfügung stehen.

In den letzten Jahren ist vorrangig für kleinere und mittlere Anlagen die gemeinsame aerobe Stabilisierung des Schlammes zusammen mit dem Abwasser in verstärktem Maß angewandt worden. Dieser Verfahrensart liegt das Prinzip zugrunde, gleichzeitig sowohl das Abwasser biologisch zu reinigen als auch den Schlamm zu stabilisieren. Eine lange Belüftungszeit und eine möglichst große Belebtschlammmenge im System sind die kennzeichnenden Merkmale dieses Verfahrens.

Diese Anlagen sind mit einer Schlammbelastung

$$B_{TS} \leqslant \frac{0{,}05 \ kgBSB_5}{kg \ TS \cdot d}$$

zu bemessen.

In dieser Gleichung bedeutet:

$B_{TS}$ Schlammbelastung, bezogen auf Trockensubstanz,

$kgBSB_5$ kg-biochemischer Sauerstoffbedarf in 5 Tagen,

kg TS kg Trockensubstanz, und

d Tag.

Liegt diese Voraussetzung vor, wird den Mikroorganismen durch das Abwasser nur wenig Substrat zugeführt. Die Stoffwechselprozesse laufen im Übergangsbereich von Substratatmung und endogenem Abbau der Zellsubstanz ab. Überschußschlamm wird nur in kleinen Mengen produziert und kann z.B. auf Trockenbeeten entwässert und anschließend als Material zur Bodenverbesserung eingesetzt oder deponiert werden. Geringe Beschickungshöhen fördern den Entwässerungsvorgang.

Man muß anstreben, das erforderliche große spezifische Beckenvolumen, Imhoff gibt im Taschenbuch der Stadtentwässerung (24. Auflage (1976) Verlag R. Ouldenburg) 240 l/Einwohner an, durch einfache Bauformen kostenmäßig auszugleichen (z.B. Grabenanlagen, Kreislaufbecken).

Für kleine Einheiten haben sich auch Kompaktanlagen bewährt, die in einer Vielzahl von Typen (ganz oder teilweise in Fertigteilbauweise) angeboten werden. Der Vorteil dieser Anlagen liegt im einfachen Betrieb und in der Robustheit des Verfahrens gegen Belastungsschwankungen des Zulaufs nach Menge und Zusammensetzung (Ausgleichs-und Puffervermögen). Die Vielfalt der Organismen bewirkt insbesondere auch bei hohem Industrieabwasseranteil ein schnelleres Adaptionsvermögen der Biomasse (vgl. Lehr-und Handbuch der Abwassertechnik Band III, Seite 201, 2. Auflage (1978, Verlag W. Ernst & Sohn).

Aus der DE-OS 3 147 920, der DE-PS 1 138 712 und der GB-PS 2 053 885 ist es bekannt, die Flüssigkeitsbewegungen in Anlagen zum Aufbereiten von Abwasser durch Absperrorgane zu regeln. Die bekannten Absperrorgane sind Ventile, die wegen des Schlammanteils in der Flüssigkeit zu Verstopfungen neigen.

Der Erfindung liegt die Aufgabe zugrunde, eine Vorrichtung der eingangs genannten Art derart weiterzubilden, daß eine Pufferung von größeren Abwassermengen (Abwasserstöße) auf einfache Art möglich ist.

Gemäß der Erfindung wird dies dadurch erreicht, daß das Verschlußorgan einen mit Hilfe eines Druckmediums in eine die Öffnung des Ablaufes versperrende Stellung bewegbaren Verschlußkörper aus einer elastisch verformbaren Folie aufweist.

Durch die erfindungsgemäße Ausbildung des Verschlußorganes ist nicht nur eine einfache Steuerung derselben z.B. mit Hilfe von in der erfindungsgemäßen Anlage ohnedies zur Verfügung stehender Druckluft oder mit unter Druck stehendem Wasser aus einer Wasserleitung möglich, sondern es sind auch Verstopfungen praktisch ausgeschlossen.

In einer bevorzugten Ausführungsform der Erfindung ist vorgesehen, daß die Zufuhr des zu reinigenden Abwassers über ein dem Belebungsbecken vorgeschaltetes Vorklärbecken erfolgt. Dabei kann vorgesehen sein, daß die Verbindung zwischen dem Vorklärbecken und dem Belebungsbecken über ein T-rohrförmiges Verbindungsstück erfolgt, das in das Vorklärbecken ragt und dessen Steg vertikal ausgerichtet und oben und unten offen ist.

Bei der erfindungsgemäßen Vorrichtung wird das Abwasser und belebter Schlamm im Belebungsbecken (oder Oxidationsgraben) gemischt und durch eine beispielsweise herkömmliche Belüftungseinrichtung belüftet. Bei herkömmlichen Vorrichtungen der eingangs genannten Gattung driftet der Schlamm in ein Nachklärbecken ab und muß wieder rückgeführt werden. Bei der erfindungsgemäßen Vorrichtung entfällt die Schlammrückführung, da sich der Schlamm während des Stillstandes der Belüftungsvorrichtung absetzen kann und im Belüftungsbecken verbleibt. Von besonderem Vorteil ist dabei, daß das dem Ablauf zugeordnete Verschlußorgan (Abschottvorrrichtung) mit Druckluft betrieben werden kann, die im System für die Belüftungsvorrichtung ohnedies erforderlich ist. Dieser Vorteil ergibt sich auch, wenn die Belüftungsvorrichtung von unter Druck stehendem Wasser nach dem Injektorprinzip arbeitet, da dann Druckwasser als Druckmedium für die Betätigung des Verschlußorgans ohnedies zur Verfügung steht. Durch das Verschlußorgan wird solange ein Aufstau zufließenden Abwassers verursacht, bis nach ausreichender Belüftung und dem anschließenden Absetzvorgang das überstehende Reinwasser durch Öffnen des Verschlußorganes abfließen kann.

Die erfindungsgemäße Vorrichtung bietet also den Vorteil, daß durch Aufstau eine Abpufferung von Abwasserstößen möglich ist. Außerdem wird durch die intermittierende Belüftung im Belebungsbecken ein weitgehender Stickstoffabbau erzielt. Weiters wird schwer absetzbarer Schlamm (sogenannter Blähschlamm) aus dem System ausgeschwemmt und der Erhalt (Zucht) von "gesunden" absetzbaren Schlammflocken möglich. Die erfindungsgemäße Vorrichtung kann als Belebungsanlage nahe dem Bereich der "endogenen Selbstveratmung" betrieben werden, so daß sie nur schwach belastet ist und Überschußschlammvolumen reduziert wird (Schlammbelastung = 0,05 kg/kg.d).

Weiters erlaubt es die erfindungsgemäße Vorrichtung, überschüssigen Schlamm in das Vorklärbecken rückzuführen.

Im Belebungsbecken (Oxidationsgraben) kann auch ein Festbett vorgesehen sein.

In einer Ausführungsform der Erfindung kann noch vorgesehen sein, daß im Anschluß an das Belebungsbecken (oder den Oxidationsgraben) eine Bodenkörper-Filterkammer als Schlammstapel vorgesehen ist. Eine hiezu beispielsweise geeignete Bodenkörper-Filterkammer ist in der EP-A 0 192 631 beschrieben. Die Menge an Überschußschlamm, und die Rückführung in das Vorklärbecken kann durch zeitabhängige Steuerung eingestellt werden.

Weitere Einzelheiten und Merkmale der Erfindung ergeben sich aus den Unteransprüchen und der nachfolgenden Beschreibung der in der Zeichnung schematisch wiedergegebenen Ausführungsformen.

Es zeigt

Fig. 1 im Schnitt eine erfindungsgemäße Vorrichtung,

Fig. 2 ein Schaltschema der Druckluftversorgung und

Fig. 3 eine andere Ausführungsform.

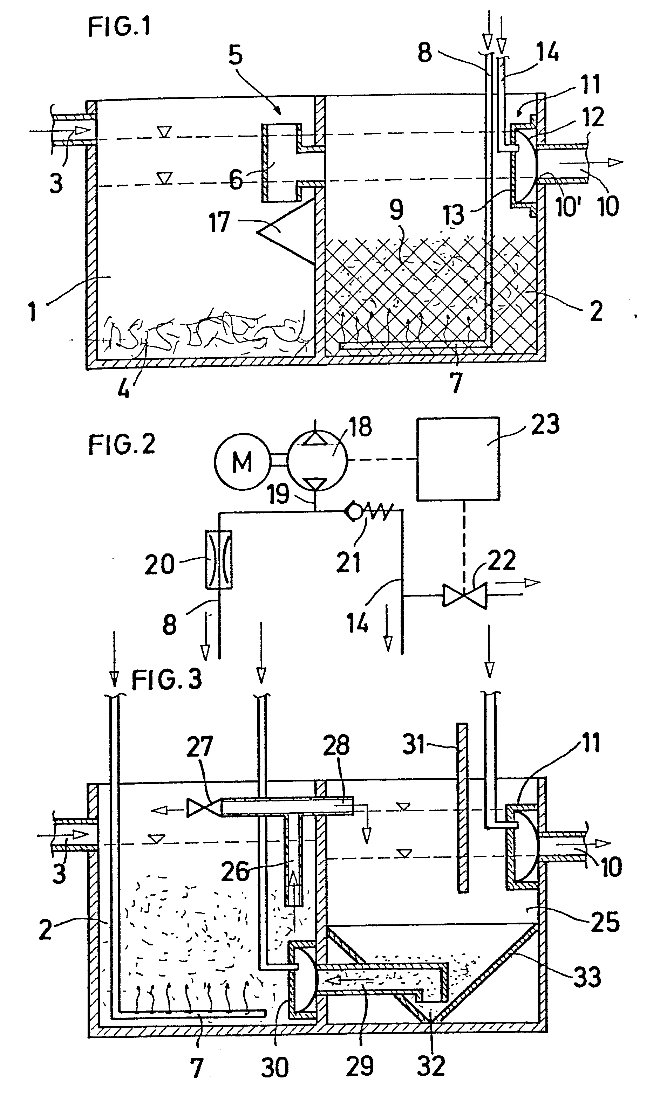

Die in Fig. 1 gezeigte Vorrichtung umfaßt ein Vorklärbecken 1 und ein Belebungsbecken 2. Anstelle des Belebungsbeckens 2 kann auch ein Oxidationsgraben vorgesehen sein. Das zu reinigende Abwasser wird über einen Zulauf 3 in das Vorklärbecken eingeleitet, wo sich am Boden Schlamm 4 absetzt. Vom Vorklärbecken 1 strömt das zu reinigende Abwasser über eine Verbindungsöffnung, die mit einem T-rohrförmigen Verbindungsstück 5 ausgestattet ist, in das Belebungsbecken 2. Das T-rohrförmige Verbindungsstück 5 ist so ausgerichtet, daß der Steg 6 des Verbindungsstückes 5 vertikal ausgerichtet ist, wobei dessen Enden oben und unten offen sind. Durch das TRohrstück 5 wird verhindert, daß Strömungen im Belebungsbecken in das Vorklärbecken übertragen werden. Durch die oben offene Ausführung des Verbindungsstückes 5 wird eine unerwünschte Heberwirkung verhindert.

Im Belebungsbecken 2 ist eine Belüftungsvorrichtung 7 vorgesehen, die über eine Zuleitung 8 intermittierend mit Druckluft beaufschlagt wird.

Im Belebungsbecken 2 kann auch ein Festbett 9 vorgesehen sein, wie dies in Fig. 1 schematisch angedeutet ist. Das Festbett 9 kann beispielsweise aus Röhren, Lamellen, Würfeln od.dgl. bestehen.

Der Ablauf 10 des Belebungsbeckens ist durch ein Ver schlußorgan 11 verschließbar. Das Verschlußorgan 11 umfaßt eine elastische Folie 12, die entlang ihres Randes an einer Platte 13 befestigt ist. Eine Druckluftleitung 14 durchsetzt die Platte 13 und die elastische Folie 12 wird bei Beaufschlagung des Verschlußorganes 11 mit Druckluft gegen die Mündung 10' des Abflusses 10 gedrückt, so daß der Ablauf 10 verschlossen ist. Die Platte 13 des Verschlußorganes 11 ist an der Wand des Belebungsbeckens 2 mit Hilfe einer Befestigungsmanschette 15 befestigt.

Der unteren Öffnung 16 des T-rohrförmigen Verbindungsstückes 15 ist ein Leitkörper 17 oder ein Leitblech zugeordnet, welches verhindert, daß Schlamm 4 aus dem Vorklärbecken 1 in das Belebungsbecken 2 gelangt.

Die in Fig. 2 gezeigte Steuerung für die Versorgung der Belüftungseinrichtung 7 und des Verschlußorganes 11 mit Druckluft ist wie folgt aufgebaut:

Von einem Drucklufterzeuger 18 (es können auch zwei Drucklufterzeuger vorgesehen sein) führt eine Leitung 19 sowohl zur Leitung 8 zur Belüftungseinrichtung 7 als auch zur Leitung 14 zum Verschlußorgan 11. In der Leitung 8 ist ein Druckreduzierventil 20 vorgesehen. In der Leitung 14 zum Verschlußorgan 11 ist ein Rückschlagventil 21 und ein Entlüftungsventil 22 vorgesehen. Der Drucklufterzeuger 18 und das Entlüftungsventil 22 in der Leitung 14 werden von einer beispielsweise elektronischen Programmsteuerung 23 gesteuert. Diese Steuerung kann wie folgt arbeiten:

Zunächst wird für eine Dauer von 60 min der Drucklufterzeuger 18 in Betrieb gesetzt, wobei das Entlüftungsventil 22 geschlossen ist, so daß sowohl die Belüftungseinrichtung 7 als auch das Verschlußorgan 11 mit Druckluft beaufschlagt sind und das Verschlußorgan den Ablauf 10 verschließt.

Während einer nachfolgenden Zeitspanne von beispielsweise 30 min wird der Drucklufterzeuger 18 von der elektronischen Steuerung 23 stillgesetzt und auch das Entlüftungsventil 22 geschlossen gehalten. Während dieser Zeitspanne kann sich im Belebungsbecken 2 Schlamm absetzen.

Im Anschluß daran wird zum Austragen von Wasser aus dem Belebungsbecken 2 beispielsweise für eine Zeitdauer von 1 min das Entlüftungsventil 22 bei stillgesetztem Drucklufterzeuger 18 geöffnet, so daß die elastische Folie 12 des Verschlußorganes 11 die Mündung 10' des Ablaufes 10 freigibt. Dabei kann auch allenfalls vorhandener schwer absetzbarer Schlamm (z.B. sogenannter Blähschlamm) über den Ablauf 10 abfließen und in eine nachgeschaltete Bodenkörperfilterkammer (nicht gezeigt) gelangen.

Falls im Belebungsbecken zu viel Schlamm ist, kann man durch geeignete Maßnahmen (z.B. ein Leitblech) dafür sorgen, daß ein Teil des Schlamms 5 aus dem Belebungsbecken zurück in das Vorklärbecken gelangt.

Die elastische Folie 12 des Verschlußorganes 11 gewährleistet einen dichten Abschluß des Ablaufes 10, auch wenn Haare, Tücher, u.dgl. eingeklemmt werden.

Während der Phase der Luft-/Sauerstoffzufuhr wird bis auf einen Sauerstoffgehalt gefahren, der vorzugsweise höher ist als der in herkömmlichen Belebungsanlagen übliche beispielsweise bis 7 mg $O_2$/l). Dann wird der Schlamm absetzen gelassen und der in das System eingebrachte Sauerstoffbiogen selbst veratmet (Ruhephase).

Bei der in Fig. 3 gezeigten Ausführungsform der erfindungsgemäßen Vorrichtung ist wieder ein Belebungsbecken 2 vorgesehen, dem Abwasser über einen Zulauf 3, gegebenenfalls aus einem Vorklärbecken zugeführt wird. Im Belebungsbecken 2 ist eine Belüftungseinrichtung 7 vorgese hen. Dem Belebungsbecken 2 nachgeschaltet ist ein Nachklärbecken 25. Die Verbindung zwischen Belebungsbecken 2 und Nachklärbecken 25 erfolgt über eine Drucklufthebeeinrichtung 26, die Abwasser und Belebtschlammflocken in das Nachklärbecken 25 pumpt. Sollte sich im Belebungsbecken 2 zuviel Belebtschlamm gebildet haben, dann kann dieser mit Hilfe der Drucklufthebeeinrichtung 26 bei geöffnetem Ventil 27 und geschlossenem Stutzen 28 ausgetragen und z.B. in ein Vorklärbecken (nicht gezeigt), gebracht werden.

Dem Auslauf 10 des Nachklärbeckens 25 und einer unteren Verbindung 29 zwischen Nachklärbecken 25 und Belebungsbecken 2 sind jeweils Verschlußorgane 11, 30 zugeordnet, die wie das Verschlußorgan aus Fig. 1 ausgebildet sind und zum Verschließen mit Druckluft beaufschlagt werden können.

Vor dem Ablauf 10 bzw. den Verschlußorganen 11 ist im Nachklärbecken 25 eine Scheidewand 31 vorgesehen, die verhindert, daß z.B. im Falle der Denitrifikation im Nachklärbecken 25 auftretender Schwimmschlamm durch den Ablauf 10 austreten kann.

Das im Nachklärbecken 25 befindliche Ende der Verbindungsleitung 29 ist nach unten abgebogen und mündet im Bereich der tiefsten Stelle 32 eines Trichters 33 aus. Damit ist gewährleistet, daß der in das Nachklärbecken 25 gelangte und dort abgesetzte Belebtschlamm über die Leitung 29 wieder in das Belebungsbecken 2 gelangt.

Beispielsweise wird die Anlage gemäß Fig. 3 so betrieben, daß zunächst 30 min lang die Belüftungseinrichtung 7 das Verschlußorgan 11 und das Verschlußorgan 30 und der Druckheber 26 mit Druckluft beaufschlagt werden (1. Phase). Während dieser Phase setzt sich Belebtschlamm im Nachklärbecken im Trichter 33 ab und die Verschlußorgane 11 und 30 sind geschlossen. Dann wird 2 min lang das Verschlußorgan 30 nicht mit Druckluft beaufschlagt (2. Pha se). Dabei strömt Wasser aus dem Nachklärbecken 25 - wegen des höheren Pegelstandes in diesem - in das Belebungsbecken 2 und' nimmt über der Leitung 29 Belebtschlamm mit. Hierauf wird 2 min lang bei geschlossenem Verschluß 30 das Verschlußorgan 11 geöffnet, d.h. nicht mit Druckluft beaufschlagt (3. Phase), so daß aufbereitetes Wasser über den Ablauf 10 austreten kann. Dann wird wieder mit der 1. Phase begonnen.

Bemerkenswert ist es, daß die Belüftungsvorrichtung 7 auch während der Phasen 2 und 3 in Betrieb bleibt.

Die Ausführungsform gemäß Fig. 3 ist für größere Anlagen bevorzugt (bis etwa 500 EGW = Einwohnergleichwerte), wogegen die Ausführungsform von Fig. 2 in erster Linie für bis zu etwa 150 - 200 EGW gedacht ist.

Die Belüftungsvorrichtung kann auch eine mit Wasser betriebene Injektordüse umfassen, über die Luft angesaugt und in das Belebungsbecken 2 geleitet wird. In diesem Fall kann das Verschlußorgan 11 mit dem für den Betrieb der Belüftungsvorrichtung benötigten Wasser, das z.B. einer Wasserleitung entnommen wird, betätigt werden.

**Patentansprüche**

1. Vorrichtung zum Aufbereiten von Abwasser mit Belüftung, wie beispielsweise Belebungsbecken oder Oxidationsgraben, mit einer in das Becken reichenden Belüftungsvorrichtung, einem Zulauf und einem Ablauf, wobei der Ablauf des Belebungsbeckens oder eines diesem nachgeschalteten Nachklärbeckkens durch ein Verschlußorgan absperrbar ist, dadurch gekennzeichnet, daß das Verschlußorgan (11) einen mit Hilfe eines Druckmediums in eine die Öffnung (10') des Ablaufes (10) versperrende Stellung bewegbaren Verschlußkörper aus einer elastisch verformbaren Folie (12) umfaßt.

2. Vorrichtung nach Anspruch 1, dadurch gekennzeichnet, daß im Anschluß an das intermittierend belüftete Belebungsbecken (2) eine Bodenkörperfilterkammer vorgesehen ist.

3. Vorrichtung nach Anspruch 1, dadurch gekennzeichnet, daß die Zufuhr des zu reinigenden Abwassers über ein dem Belebungsbecken (2) vorgeschaltetes Vorklärbecken (1) erfolgt.

4. Vorrichtung nach Anspruch 3, dadurch gekennzeichnet, daß die Verbindung zwischen dem Vorklärbecken (1) und dem Belebungsbecken (2) über ein T-rohrförmiges Verbindungsstück (5) erfolgt, das in das Vorklärbecken (1) ragt und dessen Steg (6) vertikal ausgerichtet und oben und unten offen ist.

5. Vorrichtung nach Anspruch 4, dadurch gekennzeichnet, daß der unteren Öffnung (16) des T-Rohrstückes (5) im Vorklärbecken (1) ein Leitkörper (17) zugeordnet ist.

6. Vorrichtung nach einem der Ansprüche 1 bis 5, dadurch gekennzeichnet, daß das der Ausflußöffnung (10') des Belebungsbeckens (2) zugeordnete Verschlußorgan (11) die Ausflußöffnung (10') wenigstens solange verschließt als über die Belüftungsvorrichtung (7) Luft in das Belebungsbecken (2) geleitet wird.

7. Vorrichtung nach einem der Ansprüche 1 bis 6, dadurch gekennzeichnet, daß die elastische Folie (12) des Verschlußorganes (11) mit Wasser als Druckmedium beaufschlagbar ist.

8. Vorrichtung nach einem der Ansprüche 1 bis 7, dadurch gekennzeichnet, daß die Belüftungsvorrichtung eine mit unter Druck stehendem Wasser betriebene, Luft ansaugende und in das Belebungsbecken (2) einführende Injektorvorrichtung aufweist.

9. Vorrichtung nach einem der Ansprüche 1 bis 6 und 8, dadurch gekennzeichnet, daß die elastische Folie (12) des Verschlußorganes (11) mit Luft als Druckmedium beaufschlagbar ist.

10. Vorrichtung nach einem der Ansprüche 1 bis 9, dadurch gekennzeichnet, daß die Belüftungsvorrichtung (7) und das Verschlußorgan (11) an den gleichen Drucklufterzeuger (18) bzw. die gleiche Druckwasserquelle angeschlossen sind.

11. Vorrichtung nach einem der Ansprüche 1 bis 10, dadurch gekennzeichnet, daß eine, gegebenenfalls elektronische, Programmsteuerung (22) vorgesehen ist, von der das Beaufschlagen der Belüftungsvorrichtung (7) und des Verschlußorganes (10) mit Druckluft bzw. Druckwasser gesteuert wird.

12. Vorrichtung nach Anspruch 11, dadurch gekennzeichnet, daß in der Leitung (8) zur Belüftungseinrichtung (7) gegebenenfalls ein Druckminderventil (20) und/oder in der Leitung (14) zum Verschlußorgan (11) ein Rückschlagventil (21) und ein von der Programmsteuerung gesteuertes Entlüftungsventil (22) vorgesehen ist.

13. Vorrichtung nach Anspruch 12, dadurch gekennzeichnet, daß der Drucklufterzeuger (18) von der Programmsteuerung (23) stillgesetzt und/oder die Druckluft- bzw. Druckwasser- zufuhr von dieser unterbrochen ist, während das Entlüftungsventil (22) in der Leitung (14) zum Verschlußorgan (11) geöffnet ist.

14. Vorrichtung nach einem der Ansprüche 1 bis 13, dadurch gekennzeichnet, daß zwischen dem Belebungsbecken (2) und dem Nachklärbecken (25) oben eine Abwasser in das Nachklärbecken (25) fördernde Pumpvorrichtung (26) und unten einen abgesetzten Belebtschlamm in das Belebungsbecken (2) rückführende Leitung (29) der vorzugsweise im Belebungsbecken (2) ein druckluft- oder druckwasserbetätigtes Verschlußorgan (30) zugeordnet ist, vorgesehen ist.

15. Vorrichtung nach Anspruch 14, dadurch gekennzeichnet, daß das Ende der Leitung (29) im tiefsten Bereich (32) eines im Nachklärbecken (25) vorgesehenen konusförmigen Einbauteils (Trichter 33) von oben kommend ausmündet.

16. Vorrichtung nach Anspruch 14 oder 15, dadurch gekennzeichnet, daß die Pumpvorrichtung eine an sich bekannte Drucklufthebeeinrichtung (26) ist, die oben zwei absperrbare Ausgänge aufweist, von welchen einer (28) in das Nachklärbecken (25) und der andere aus der Vorrichtung gegebenenfalls in ein Vorklärbecken führt.

EP 0 339 013 A2

FIG.1

FIG.2

FIG.3